# EUROPEAN PATENT APPLICATION

(11) **EP 0 840 094 A2**
(43) Date of publication of application: **06.05.1998**
(21) Application number: 97302645.3
(22) Date of filing: 17.04.1997
(51) Int. Cl.: G01C 21/20

(54) **Navigation system**

(30) Priority: 31.10.1996 KR 9651148
(71) Applicant: Samsung Electronics Co., Ltd., Suwon City, Kyungki-do (KR)
(72) Inventor: Kim, Sun-Woo, Suwon-City, Kyungki-do (KR)
(74) Representative: Neill, Alastair William

(57) **Abstract**

A navigation system for use in a mobile object and processing method thereof. Travelling route information generated during travelling is differently displayed according to the accuracy of a global positioning system (GPS) signal by checking whether accurate position information is received according to the receiving state of a GPS satellite, thus to cause a driver to be able to confirm current position information varying with the receiving state of the satellite.

## Description

The present invention relates to a navigation system for use in a mobile object and to a method for displaying travelling information. More particularly, though not exclusively, the present invention relates to a navigation system and processing method thereof for displaying the current position and travelling locus of a car which is moving by receiving a global positioning system signal.

A navigation system for use in a car should confirm, when the car is moving, the current position and speed of such a mobile object by receiving a radio wave produced from a plurality of artificial satellites belonging to a global positioning system (GPS). The navigation system has a function of providing travelling information to a driver by displaying the current position of the car calculated by use of a GPS position calculator on a map display unit, for example, a CRT (cathode ray tube), a TFT (thin file transistor) color LCD (liquid crystal display) so as to guide the direction of the car. To carry out such a function, a 3-dimensional current position including latitude, longitude and altitude information is calculated by using information received from a GPS receiver. A GPS signal has an error of about 10m when using a P-code signal and has an error of about 100m when using a C/A-code signal. Such an error in the position is compensated by using a speed sensor, a distance sensor, etc, and the current position of the car is calculated by generating the more accurate position information.

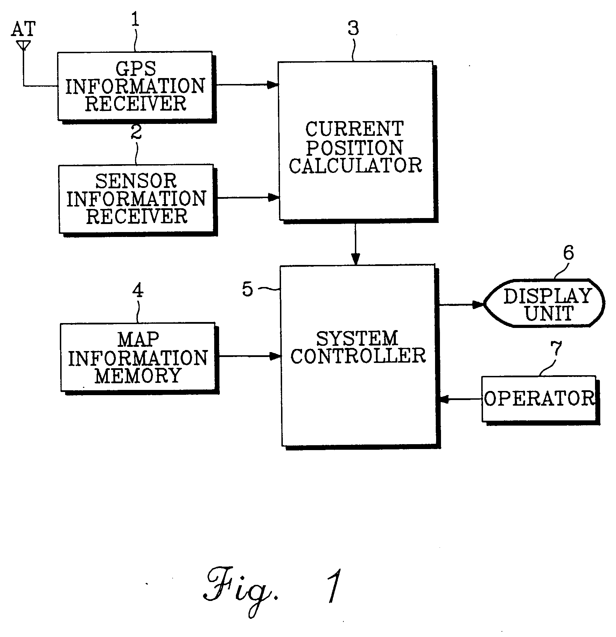

A conventional navigation system for implementing the above-mentioned function is indicated in Figure 1. Referring to Figure 1, a GPS information receiver 1 receives a radio wave through an antenna AT from a plurality of artificial satellites belonging to the GPS, and calculates a pseudo coordinate value of the current position. A sensor information receiver 2 includes a gyrosensor and a speed sensor, and senses the rotary angle and speed of the car by the gyrosensor and the speed sensor. A current position calculator 3 calculates a current pseudo position of the car on the basis of the rotary angle and speed generated from the sensor information receiver 2, and selects either the pseudo coordinate value transmitted from the GPS information receiver 1 or the current pseudo position. If an error accumulated from the sensor information receiver 2 is small, the calculated pseudo position value is used. If the accumulated error is large, it is compensated by the pseudo coordinate value transmitted from the GPS information receiver 1. The current position calculator 3 calculates the travelling information such as the speed and travelling direction of the car as well as the current position of the car. The travelling information of the car is transmitted to a system controller 5. A map information memory 4 stores map information and additional information data. An operator 7 has a plurality of keys and interfaces a driver with the navigation system. A display unit 6 displays the map information read from the map information memory 4 and indicates states generated when performing various functions. The system controller 5 reads, from the map information memory 4, the map information of a neighboring region on the basis of the travelling information obtained from the current position calculator 3. Furthermore, the system controller 5 provides travelling route information generated during travelling routes up to the destination to the driver by controlling the display unit 6 so as to display the travelling route information over a constant period of distance and time.

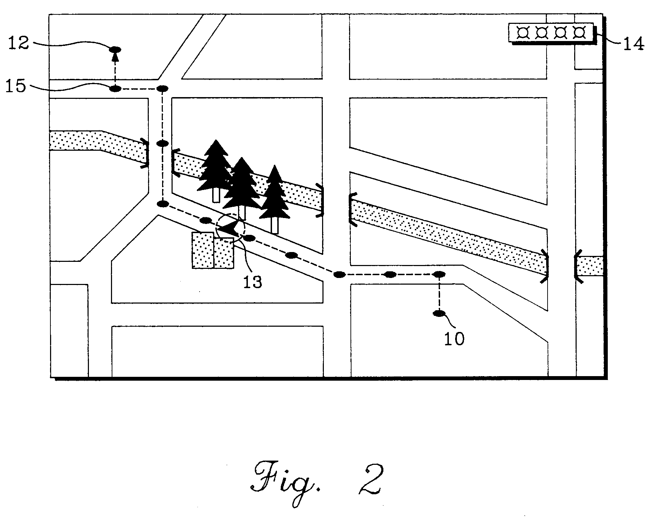

However, the current position or the travelling route calculated according to the state of a receivable GPS satellite is displayed in the same form, whether a GPS receiving state is good or not due to the influence of terrain such as an urban district, mountainous area, etc. Although the current position confirmed by the driver differs from the position of a road map indicated by the display unit 6, since there is no a method for confirming this, the accuracy of the current position during driving is not reliable. While the driver travels from a start position 10 to a destination 12 shown in Figure 2, since a current position 13 is displayed in the same form without discriminating according to the receiving state of the satellite, the driver confirms the receiving state of satellite information by confirming the number of the received satellites 14. In this case, the receiving state of the satellite can not be confirmed only by a travelling route 15. Moreover, since the driver does not always watch the entire display unit of the navigation system during driving, it is difficult to accurately understand whether the current information uses the good receiving state of the satellite.

It is an aim of preferred embodiments of the present invention to provide a navigation system and processing method thereof which can confirm information about a current position varying with the receiving state of a satellite.

It is another aim of preferred embodiments of the present invention to provide a navigation system and processing method thereof which can confirm a current position or travelling route information by checking a travelling route while a driver is driving or after the driver travels up to the destination.

According to the present invention in a first aspect, there is provided a navigation system for displaying travelling information of a mobile object, comprising:
a global positioning system (GPS) information receiver for receiving a radio wave through an antenna from a plurality of artificial satellites belonging to a GPS, and calculating a pseudo coordinate value of a current position;
a sensor information receiver including a gyrosensor and a speed sensor, for sensing a rotary angle of said mobile object and a speed thereof by said gyrosensor and said speed sensor;
a current position calculator for calculating a current pseudo position of said mobile object on the basis of said rotary angle and said speed generated from said sensor information receiver, and selecting either said pseudo coordinate value of the current position transmitted from said GPS information receiver or said current pseudo position;
a map information memory for storing map information and additional information data;
an operator having a plurality of function keys selected by a driver;
a controller for reading, from said map information memory, the map information of a neighboring region on the basis of the travelling information obtained from said current position calculator, and generating a control signal so as to display current position information and travelling route information;
a display signal generator for receiving said control signal from said controller and generating a display signal for displaying the current position information and the travelling route information;
a display unit for displaying the map information about the current position and the travelling route by said display signal generated from said display signal generator; and
a GPS signal discriminator for judging whether the current position information or the travelling route information is received from 3 satellites or more, said GPS signal discriminator being controlled by said controller.

Suitably, said display signal generator generates a current position display signal and a travelling route display signal according to the number of received satellites.

According to the present invention in a second aspect, there is provided a method for displaying travelling information of a mobile object in a navigation system, said method comprising the steps of:
calculating a current position and a travelling route and calculating the number of received satellites;
checking whether the number of the received satellites is more than a predetermined number;
if the number of the received satellites is less than said predetermined number, displaying the current position of the mobile object received from satellites under said predetermined number; and
if the number of the received satellites is more than said predetermined number, displaying the current position of the mobile object received from satellites over said predetermined number.

Suitably, the state of the satellite is judged to be good if the number of the received satellites is more than 3.

Suitably, the method further comprises the steps of:
checking whether a travelling route display is selected; and
if said travelling route display is selected, differently displaying travelling route information received from 3 satellites or less and the travelling route information received from 3 satellites or more.

According to the present invention in a third aspect, there is provided a method for displaying travelling information of a mobile object, said method comprising the step of: differently displaying travelling route information generated during travelling according to the accuracy of a global positioning system (GPS) signal by checking whether accurate position information is received according to the receiving state of a GPS satellite, thus to cause a driver to be able to confirm current position information varying with the receiving state of the satellite.

According to the present invention in a fourth aspect, there is provided a navigation system for use in a mobile object, the system comprising means for receiving positioning information from a plurality of sources and means for differently indicating whether the positioning information is received from at least a predetermined number of sources.

Suitably, the navigation system further comprises any one or more of the features in the accompanying description, claims, abstract and/or drawings, in any combination.

The present invention will become more apparent from the following detailed description of an embodiment of the present invention, by way of example only, taken with the attached drawings in which like elements are designated by like reference numerals throughout the views and in which:
Figure 1 is a block diagram of a conventional navigation system;
Figure 2 is a diagram showing navigation screen information of Figure 1;
Figure 3 is a block diagram of a navigation system according to an embodiment of the present invention;
Figure 4 is a flow chart for processing a GPS signal received during travelling according to an embodiment of the present invention; and
Figure 5 is a diagram showing navigation screen information of Figure 3.

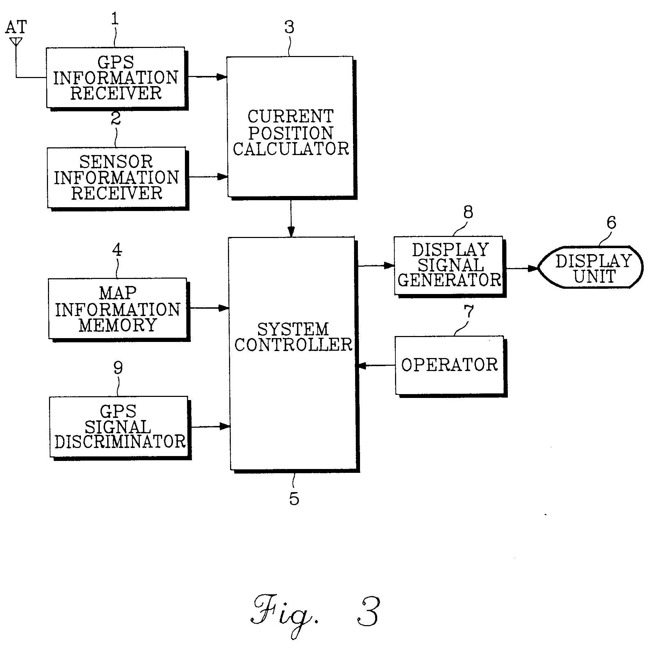

Figure 3 has the same construction as Figure 1 except for a display signal generator 8 and a GPS signal discriminator 9. The GPS signal discriminator 9 judges whether information about a current position or a travelling route is received from 3 satellites or more. The display signal generator 8 controlled by a system controller 5 generates a current position display signal and a travelling route display signal according to the number of received satellites.

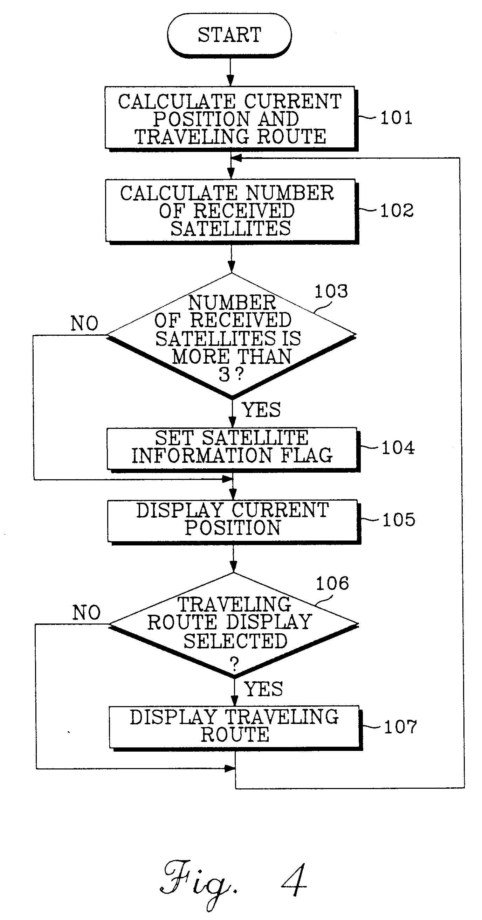

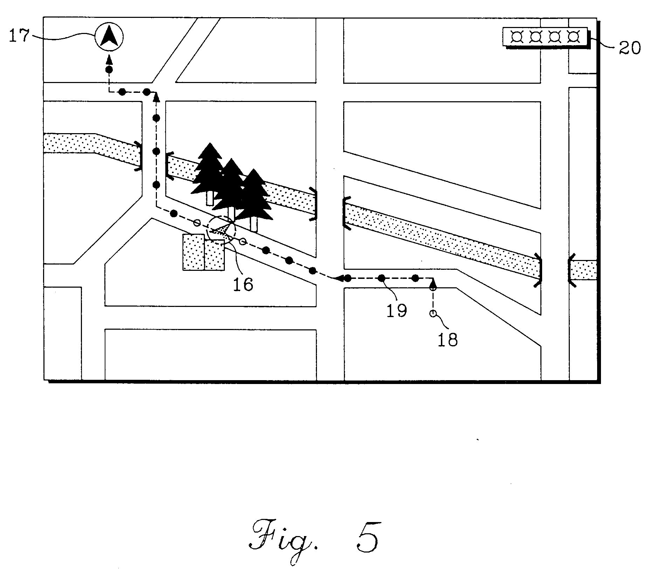

Figure 4 is a flow chart for processing a GPS signal received during travelling. Figure 5 shows navigation screen information.

The operation for processing information about the current position and the travelling route will now be described with reference to Figures 3, 4 and 5. While a driver travels, a GPS information receiver shown in Figure 3 receives a radio wave through an antenna AT from a plurality of artificial satellites belonging to a GPS, and calculates a pseudo coordinate value of the current position. A sensor information receiver 2 includes a gyrosensor and a speed sensor, and senses the rotary angle and speed of a car by the gyrosensor and the speed sensor. A current position calculator 3 calculates a current pseudo position of the car on the basis of the rotary angle and speed generated from the sensor information receiver 2, and selects either the pseudo coordinate value transmitted from the GPS information receiver 1 or the current pseudo position. If an error accumulated from the sensor information receiver 2 is small, the calculated pseudo position value is used. If the accumulated error is large, it is compensated by the pseudo coordinate value transmitted from the GPS information receiver 1. The current position calculator 3 calculates travelling information such as the speed and travelling direction of the car as well as the current position of the car. The calculated travelling information of the car is transmitted to the system controller 5. A map information memory 4 stores map information and additional information data. An operator 7 has a plurality of function keys and transmits a key input performed by a driver to the system controller 5. A display unit 6 displays the map information read from the map information memory 4 and states generated when performing various functions. The system controller 5 reads, from the map information memory 4, the map information of a neighboring region on the basis of the travelling information obtained from the current position calculator 3. Furthermore, the system controller 5 controls the display signal generator 8 so as to display the current position information and the travelling route information received from a GPS satellite. The display signal generator 8 receives a control signal for displaying the current position information and the travelling route information, and controls the display unit 6 so as to display the current position information and the travelling route information.

In order to display the current position information and the travelling route information, the operation for processing the GPS signal received from the satellite is shown in Figure 4. The system controller 5 receives, at step 101, the current position information and the travelling route information from the current position calculator 3. At step 102, the system controller 5 calculates the number of the received satellites and supplies the number of the received satellites to the GPS signal discriminator 9. At step 103, the system controller 5 checks whether the state of the satellite is good by checking whether the number of the received satellites is more than 3. If the state of the satellite is not good, the system controller 5 returns to step 105, and if it is good, the system controller 5 sets, at step 104, a satellite information flag. At step 105, the system controller 5 causes the display signal generator 8 to display the current position information on the display unit 6 according to the state of the satellite information flag. As shown in Figure 5, a current position indicated by a reference numeral 16 or 17 is differently displayed on a screen of the display unit 6. The current position 16 of the car shows a poor receiving state indicating that the number of the received satellites is less than 3 due to the influence of terrain such as buildings or street trees. The current position 17 shows a good receiving state indicating that the number of the received satellites is more than 3. At step 106, the system controller 5 checks whether or not a travelling route display is selected. If it is not selected, the system controller 5 returns to step 102. If it is selected, the system controller 5 causes the display signal generator 8 to display the travelling route on the display unit 6 as indicated by reference numerals 18 and 19 shown in Figure 5. The travelling route 18 indicates when the number of the received satellites is less than 3. The travelling route 19 indicates when the number of the received satellites is more than 3.

As described above, since the navigation system displays the current position information and the travelling route information of the car by confirming the state of the GPS signal received from the satellite, the driver can know the current position and the state of the satellite reception at the travelling route even though the driver does not confirm the display screen on a road map during driving. Moreover, since there is no need to continue to see the display screen in order to confirm the state of the satellite, accidents caused by careless driving can be prevented.

It should be understood that the present invention is not limited to the particular embodiment disclosed herein as the best mode contemplated for carrying out the present invention, but rather that the present invention is not limited to the specific embodiments described in this specification except as defined in the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A navigation system for displaying travelling information of a mobile object, comprising:
a global positioning system (GPS) information receiver (1) for receiving a radio wave through an antenna (AT) from a plurality of artificial satellites (20) belonging to a GPS, and calculating a pseudo coordinate value of a current position;
a sensor information receiver (2) including a gyrosensor and a speed sensor, for sensing a rotary angle of said mobile object and a speed thereof by said gyrosensor and said speed sensor;
a current position calculator (3) for calculating a current pseudo position of said mobile object on the basis of said rotary angle and said speed generated from said sensor information receiver (2), and selecting either said pseudo coordinate value of the current position transmitted from said GPS information receiver (1) or said current pseudo position;
a map information memory (14) for storing map information and additional information data;
an operator (7) having a plurality of function keys selected by a driver;
a controller (5) for reading, from said map information memory (4), the map information of a neighboring region on the basis of the travelling information obtained from said current position calculator (3), and generating a control signal so as to display current position information and travelling route information;
a display signal generator (8) for receiving said control signal from said controller (5) and generating a display signal for displaying the current position information and the travelling route information;
a display unit (6) for displaying the map information about the current position and the travelling route by said display signal generated from said display signal generator (8); and
a GPS signal discriminator (9) for judging whether the current position information or the travelling route information is received from 3 satellites or more, said GPS signal discriminator (9) being controlled by said controller (5).

2. A navigation system as claimed in claim 1, wherein said display signal generator (8) generates a current position display signal and a travelling route display signal according to the number of received satellites.

3. A method for displaying travelling information of a mobile object in a navigation system, said method comprising the steps of:
calculating a current position and a travelling route and calculating the number of received satellites;
checking whether the number of the received satellites is more than a predetermined number;
if the number of the received satellites is less than said predetermined number, displaying the current position of the mobile object received from satellites under said predetermined number; and
if the number of the received satellites is more than said predetermined number, displaying the current position of the mobile object received from satellites over said predetermined number.

4. A method as claimed in claim 3, wherein the state of the satellite is judged to be good if the number of the received satellites is more than 3.

5. A method as claimed in claim 3 or claim 4, further comprising the steps of:
checking whether a travelling route display is selected; and
if said travelling route display is selected, differently displaying travelling route information received from 3 satellites or less and the travelling route information received from 3 satellites or more.

6. A method for displaying travelling information of a mobile object in a navigation system, said method comprising the step of:
differently displaying travelling route information generated during travelling according to the accuracy of a global positioning system (GPS) signal by checking whether accurate position information is received according to the receiving state of a GPS satellite, thus to cause a driver to be able to confirm current position information varying with the receiving state of the satellite.

7. A navigation system for use in a mobile object, the system comprising means (1) for receiving positioning information from a plurality of sources (20) and means (5, 6, 8, 9) for differently indicating whether the positioning information is received from at least a predetermined number of sources.

8. A navigation system according to claim 7, further comprising any one or more of the features in the accompanying description, claims, abstract and/or drawings, in any combination.
